# EUROPEAN PATENT APPLICATION

(11) **EP 3 549 749 A1**
(43) Date of publication of application: **09.10.2019**
(21) Application number: 19158138.8
(22) Date of filing: 19.02.2019
(51) Int. Cl.: B29C 64/40, B29C 64/118

(54) **THREE-DIMENSIONAL OBJECT PRODUCING APPARATUS, THREE-DIMENSIONAL OBJECT PRODUCING METHOD, AND THREE-DIMENSIONAL OBJECT FORMING PROGRAM**

(30) Priority: 19.03.2018 JP 2018051568
(71) Applicant: Ricoh Company, Ltd., Tokyo 143-8555 (JP)
(72) Inventor: SUGIURA, Kenji, Tokyo, 143-8555 (JP); MATSUBARA, Kohta, Tokyo, 143-8555 (JP); KOIKE, Yuta, Tokyo, 143-8555 (JP)
(74) Representative: Lamb, Martin John Carstairs

(57) **Abstract**

Provided is a three-dimensional object producing apparatus (10) including: a discharging unit (11, 12) configured to discharge a model material (301) or a support material (302), or both thereof; and a preparatory discharge controlling unit (500) configured to control the discharging unit (11, 12) in a manner to bring at least the model material (301) into contact with a stage (14) in preparatory discharge to outside a region (14a) in which a three-dimensional object is to be formed.

## Description

### BACKGROUND OF THE INVENTION

### Field of the Invention

The present disclosure relates to a three-dimensional object producing apparatus, a three-dimensional object producing method, and a three-dimensional object forming program.

### Description of the Related Art

Techniques referred to as additive manufacturing (AM) have been known as techniques for forming three-dimensional stereoscopic objects (three-dimensional objects).

It has been known to discharge a material used for forming a layer onto a position at which no layer is to be formed, as preparatory discharge before forming a layer constituting a three-dimensional object (for example, see Japanese Unexamined Patent Application Publication No. 2016-16568).

The present disclosure has an object to provide a three-dimensional object producing apparatus that enables easy removal of a material discharged for a preparatory purpose, without letting the material contaminate a stage.

### SUMMARY OF THE INVENTION

A three-dimensional object producing apparatus of the present disclosure includes a discharging unit configured to discharge a model material or a support material, or both thereof, and a preparatory discharge controlling unit configured to control the discharging unit in a manner to bring at least the model material into contact with a stage in preparatory discharge to outside a region in which a three-dimensional object is to be formed.

The present disclosure can provide a three-dimensional object producing apparatus that enables easy removal of a material discharged for a preparatory purpose, without letting the material contaminate a stage.

### BRIEF DESCRIPTION OF THE DRAWINGS

FIG. 1 is an exemplary diagram illustrating an example of a front view of a main part of a three-dimensional object producing apparatus;
FIG. 2 is an exemplary diagram illustrating an example of a plan view of a main part of a three-dimensional object producing apparatus;
FIG. 3 is an exemplary diagram illustrating an example of a side view of a main part of a three-dimensional object producing apparatus;
FIG. 4 is a block diagram illustrating a controlling section of a three-dimensional object producing apparatus;
FIG. 5 is a diagram illustrating an example of a positional relationship between a discharging unit and a stage during a standby period before start of production of a three-dimensional object;
FIG. 6 is a diagram illustrating an example of a positional relationship between a discharging unit and a stage when the discharging unit performs flushing;
FIG. 7 is a diagram illustrating an example of a positional relationship between a discharging unit and a stage when the discharging unit discharges an object forming material to an object forming region to start production of a three-dimensional object;
FIG. 8 is a diagram illustrating an embodiment of a place where a preparatory-discharge-formed object is to be formed;
FIG. 9 is a diagram illustrating another embodiment of a place where a preparatory-discharge-formed object is to be formed;
FIG. 10 is a diagram illustrating another embodiment of a place where a preparatory-discharge-formed object is to be formed;
FIG. 11 illustrates an embodiment of a case where a model material and a support material are discharged in a manner that the model material and the support material are mixed with each other;
FIG. 12 illustrates another embodiment of a case where a model material and a support material are discharged in a manner that the model material and the support material are mixed with each other;
FIG. 13 is a diagram illustrating an embodiment of a structure of a preparatory-discharge-formed object formed over a stage;
FIG. 14 is a diagram illustrating another embodiment of a structure of a preparatory-discharge-formed object formed over a stage;
FIG. 15 is a diagram illustrating another embodiment of a structure of a preparatory-discharge-formed object formed over a stage;
FIG. 16 is a diagram illustrating another embodiment of a structure of a preparatory-discharge-formed object formed over a stage;
FIG. 17 is a diagram illustrating an example of a shape of a preparatory-discharge-formed object that is in a state of a portion formed of a support portion being at a higher position than a portion formed of a model portion;
FIG. 18 is a flowchart illustrating an example of a process according to a three-dimensional object forming program;
FIG. 19 is an image of a test object present in a three-dimensional object producing apparatus, captured immediately after the test object is formed;
FIG. 20 is an image of a test object formed of a model portion formed in Test example 1, captured after the test object is removed from an object forming stage;
FIG. 21 is an image of a test object formed of a mixture portion formed in Test example 2, captured after the test object is removed from an object forming stage; and
FIG. 22 is an image of a test object formed of a support portion formed in Text example 3, captured after the test object is removed from an object forming stage.

### DESCRIPTION OF THE EMBODIMENTS

### (Three-dimensional object producing apparatus, three-dimensional object producing method, and three-dimensional object forming program)

A three-dimensional object producing apparatus of the present disclosure includes a discharging unit configured to discharge a model material or a support material, or both thereof, and a preparatory discharge controlling unit configured to control the discharging unit in a manner to bring at least the model material into contact with a stage in preparatory discharge to outside a region in which a three-dimensional object is to be formed, and further includes other units as needed.

A three-dimensional object producing method of the present disclosure includes a discharging step of causing the discharging unit to discharge a model material or a support material, or both thereof, and a preparatory discharge step of controlling the discharging unit in a manner to bring at least the model material into contact with a stage in preparatory discharge to outside a region in which a three-dimensional object is to be formed, and further includes other steps as needed.

The three-dimensional object producing method can be suitably performed by the three-dimensional object producing apparatus. The discharging step can be suitably performed by the discharging unit. The preparatory discharge step can be suitably performed by the preparatory discharge controlling unit. The other steps can be performed by the other units.

The present disclosure is based on a finding that easy removal of a material discharged for a preparatory purpose without letting the material contaminate a stage may be difficult with existing three-dimensional object producing apparatuses.

In preparatory discharge, it is preferable to cause the discharging unit to discharge both of the model material and the support material, in terms of securely stabilizing discharging of the discharging unit. In this case, a preparatory-discharge-formed object formed by the preparatory discharge includes a portion formed of a model portion and a portion formed of a support portion. The support portion formed from the support material being cured has properties such as water disintegrability in order to have improved removability, often is in a toughness-less (brittle) state, and may disintegrate into a particulate state even when a small force is applied to the support portion.

When a preparatory-discharge-formed object is formed over a stage, the preparatory-discharge-formed object needs to be removed from the stage, for example, after production of a three-dimensional object is completed. If a portion formed of the support material exists at a surface of the preparatory-discharge-formed object contacting the stage, the portion formed of the support material disintegrates into a particulate state during removal of the preparatory-discharge-formed object, to contaminate the stage and make it difficult for the preparatory-discharge-formed object to be completely removed from the stage.

The three-dimensional object producing apparatus of the present disclosure enables easy removal of the material discharged for the preparatory purpose, without letting the material contaminate the stage.

The three-dimensional object producing apparatus of the present disclosure operates as an apparatus configured to perform the three-dimensional object producing method of the present disclosure by reading out and executing a three-dimensional object forming program of the present disclosure. That is, the three-dimensional object producing apparatus of the present disclosure includes the three-dimensional object forming program of the present disclosure causing a computer to execute the same functions as the three-dimensional object producing method of the present disclosure. The three-dimensional object forming program of the present disclosure is not limited to being executed by the three-dimensional object producing apparatus of the present disclosure. For example, the three-dimensional object forming program of the present disclosure may be executed by another computer or a server, or may be executed by any of the three-dimensional object producing apparatus of the present disclosure, another computer, and a server in cooperation.

That is, the three-dimensional object producing apparatus of the present disclosure is the same as carrying out the three-dimensional object producing method of the present disclosure. Hence, details of the producing method of the present disclosure will also be specified through description mainly about the three-dimensional object producing apparatus of the present disclosure. The three-dimensional object forming program for a three-dimensional object of the present disclosure realizes the three-dimensional object producing apparatus of the present disclosure with the use of, for example, computers as hardware resources. Hence, details of the forming program of the present disclosure will also be specified through description of the producing apparatus of the present disclosure.

### <Discharging unit and discharging step>

The discharging unit is configured to discharge a model material or a support material, or both thereof.

In the discharging step, the discharging unit discharges a model material or a support material, or both thereof.

The model material and the support material may be collectively referred to as "object forming materials".

The discharging unit is not particularly limited and may be appropriately selected depending on the intended purpose, so long as the discharging unit is a unit configured to discharge the object forming materials. Examples of the discharging unit include a head.

The head is not particularly limited and may be appropriately selected depending on the intended purpose. Examples of the head include a piezoelectric element (piezo-element)-type head and a thermal expansion (thermal)-type head. The head may be provided with, for example, a piezoelectric element in each of a plurality of discharging holes, and may be configured in a manner that discharging can be controlled discharging hole by discharging hole.

### <Preparatory discharge controlling unit and preparatory discharge step>

The preparatory discharge controlling unit is configured to control the discharging unit in a manner to bring at least the model material into contact with the stage in preparatory discharge to outside a region in which a three-dimensional object is to be formed.

In the preparatory discharge step, the discharging unit is controlled in a manner to bring at least the model material into contact with the stage in preparatory discharge to outside a region in which a three-dimensional object is to be formed.

In the preparatory discharge step, the preparatory discharge controlling unit controls the discharging unit and causes the discharging unit to perform preparatory discharge.

The preparatory discharge controlling unit is not particularly limited and may be appropriately selected depending on the intended purpose. Examples of the preparatory discharge controlling unit include a CPU (Central Processing Unit) and an FPGA (Field Programmable Gate Array).

The preparatory discharge controlling unit executes various programs and controls the operation of the entire three-dimensional object producing apparatus.

### «Three-dimensional object»

The three-dimensional object is not particularly limited and may be appropriately selected depending on the intended purpose. An object formed using the object forming materials is referred to as three-dimensional object. Examples of the three-dimensional object include prototypes of industrial products, dies used for injection molding and press molding, jigs and tools, and architects' models.

### «Stage»

The stage refers to a table over which object forming layers are laminated to form a three-dimensional object.

The stage may be movable by, for example, a motor. In the following description, "stage" may be referred to as "object forming stage".

### «Region in which three-dimensional object is to be formed»

A region in which a three-dimensional object is to be formed refers to a region that is provided over the stage and in which a three-dimensional object is to be formed. In the following description, the region in which a three-dimensional object is to be formed may be referred to as "object forming region".

The object forming region may be provided at an arbitrary place over the stage. For example, it is preferable that the object forming region be provided near the center of the stage. The object forming region may be set in accordance with the shape of the three-dimensional object to be produced, or may be set as a fixed region over the stage regardless of the shape of the three-dimensional object to be produced.

"Outside the object forming region" refers to a region over the stage, provided outside the object forming region.

A place outside the object forming region is not particularly limited and may be appropriately selected depending on the intended purpose. For example, a region between the object forming region and an end of the stage is preferable.

### «Preparatory discharge»

Preparatory discharge (empty discharge) refers to discharging at least the model material to outside the object forming region.

By preparatory discharge, the three-dimensional object producing apparatus of the present disclosure can suppress unstable discharging of the discharging unit, and can improve the object forming accuracy during production of a three-dimensional object.

Next, the quantity conditions of the model material and the support material to be discharged in preparatory discharge in the case of causing the discharging unit to discharge both of the model material and the support material in preparatory discharge will be described.

By causing both of the model material and the support material to be discharged in preparatory discharge, the preparatory discharge controlling unit can stabilize discharging from each discharging hole configured to discharge the model material or the support material. Therefore, it is possible to better improve the object forming accuracy of a three-dimensional object to be produced. In this case, it is preferable to discharge the model material and the support material in equal or similar amounts, in order to make a preparatory-discharge-formed object to be formed by preparatory discharge uniform in height.

Specifically, as a case where the model material and the support material are not to be discharged in equal or similar amounts, a case where the amounts to be discharged in preparatory discharge are reversed from the amounts to be discharged to the object forming region in order to suppress the amounts of the model material and the support material to be consumed in preparatory discharge will be considered. In this case, for example, when it is assumed that the amount of the model material to be discharged to the object forming region is higher than the amount of the support material to be discharged to the object forming region, in preparatory discharge, the support material is to be discharged in an amount higher than the amount of the model material. Hence, in the case of discharging the model material and the support material in a manner that the model material and the support material are not mixed with each other, a portion formed of a support portion formed from the support material being cured is at a higher position than a portion formed of a model portion formed from the model material being cured in the preparatory-discharge-formed object formed by preparatory discharge.

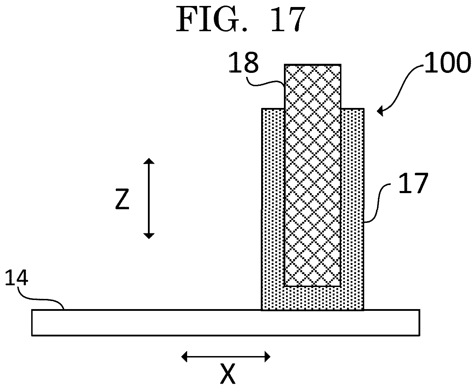

FIG. 17 is a diagram illustrating an example of the shape of the preparatory-discharge-formed object that is in a state of the portion formed of the support portion being at a higher position than the portion formed of the model portion. In the example illustrated in FIG. 17, the support portion 18 is at a higher position than the model portion 17. When preparatory discharge is further performed toward the preparatory-discharge-formed object illustrated in FIG. 17, liquid droplets of the model material discharged toward the model portion 17 become misty by the time when the model material lands on the model portion 17 because the distance until the model material lands on the model portion 17 is long, giving rise to a possibility of contaminating the surrounding environment. Further, if the model material or the support material that has become misty adheres to a three-dimensional object during production, the surface condition of the three-dimensional object is deteriorated, constituting a factor of degrading the object forming quality. Therefore, in preparatory discharge, it is preferable to cause the discharging unit to discharge the model material and the support material in equal or similar amounts.

Further, it is preferable to perform preparatory discharge before the discharging unit performs discharging to the object forming region. Because the three-dimensional object producing apparatus of the present disclosure performs preparatory discharge before forming an object forming layer, it is possible to better improve the object forming accuracy during production of a three-dimensional object.

Moreover, it is preferable to perform preparatory discharge after the discharging unit performs flushing and before the discharging unit performs discharging to the object forming region.

Because the object forming material near the opening of a discharging hole that performs discharging infrequently is dry from being exposed to the atmosphere, the object forming material may have thickened to a high viscosity or may have formed a coating film, constituting a factor of a discharging failure of the discharging hole. When the object forming material is not discharged from a discharging hole for a certain time or longer, there is a need for performing maintenance of the discharging hole during production of a three-dimensional object in order to suppress occurrence of a discharging failure. By performing flushing in which the object forming material is flushed out in a predetermined amount from the discharging hole as the maintenance of the discharging hole, it is possible to remove, for example, the object forming material that has thickened to a high viscosity or the coating film of the object forming material formed near the opening of the discharging hole.

In flushing, the discharging unit moves from the stage to a region in which flushing is to be performed, and flushes out the object forming material in a predetermined amount.

Flushing is performed after the discharging unit has moved to the region in which flushing is to be performed. Therefore, when a three-dimensional object is to be formed after flushing, the discharging unit is to discharge the object forming material to the object forming region after the discharging unit has moved again to the object forming region over the stage. In this case, because the meniscus formed in a discharging hole of the discharging unit may have become unstable (or may have broken) due to the move of the discharging unit after flushing, a discharging failure may occur. This discharging failure is outstanding when the discharging unit has moved in the vertical direction (Z-axis direction) after flushing.

By the discharging unit performing preparatory discharge after performing flushing and before performing discharging to the object forming region, the three-dimensional object producing apparatus of the present disclosure can suppress a discharging failure of the discharging unit immediately after the discharging unit has performed flushing, and can better improve the object forming accuracy during production of a three-dimensional object.

The three-dimensional object producing apparatus of the present disclosure controls the discharging unit to bring at least the model material into contact with the stage in preparatory discharge.

If a portion formed of a support portion exists at a surface of the preparatory-discharge-formed object contacting the stage, the portion formed of the support portion may disintegrate into a particulate state during removal of the preparatory-discharge-formed object. In this case, the support portion that has disintegrated into a particulate state contaminates the stage, and it is difficult to completely remove the preparatory-discharge-formed object from the stage.

By letting the preparatory discharge controlling unit perform control in a manner to bring at least the model material into contact with the stage, the three-dimensional object producing apparatus of the present disclosure makes at least a model portion be contained in a surface, of the preparatory-discharge-formed object to be formed by preparatory discharge, contacting the stage. That is, the surface of the preparatory-discharge-formed object contacting the stage is to be formed of a model portion or is to be formed of a mixture portion formed from a mixture material, in which the model material and the support material are mixed, being cured. In this way, the surface of the preparatory-discharge-formed object contacting the stage is free of a portion formed of a support portion. Hence, this preparatory-discharge-formed object can be removed easily without contaminating the stage.

It is preferable to let the preparatory discharge controlling unit perform control in a manner to bring the model material and the support material into contact with the stage in a mixed state.

The control in a manner to bring the model material and the support material into contact with the stage in a mixed state is not particularly limited and may be appropriately selected depending on the intended purpose. Examples of the control in a manner to bring the model material and the support material into contact with the stage in a mixed state include control for making discharged liquid droplets of the model material and the support material merge with each other during flying, and control for discharging liquid droplets of the model material and the support material in a manner that the model material and the support material mix with each other at the time of landing onto the stage.

By preparatory discharge performed in a manner to bring the model material and the support material into contact with the stage in a mixed state, the three-dimensional object producing apparatus of the present disclosure can provide a preparatory-discharge-formed object that can be easily removed without contaminating the stage, at the same time as enabling preparatory discharge of the model material and the support material from the discharging unit. Further, by preparatory discharge of the model material and the support material, the three-dimensional object producing apparatus of the present disclosure can stabilize discharging from each discharging hole configured to discharge the model material or the support material, making it possible to better improve the object forming accuracy of a three-dimensional object to be produced.

It is further preferable to let the preparatory discharge controlling unit perform control in a manner that at least a part of a range to which the model material is discharged and at least a part of a range to which the support material is discharged overlap with each other.

The control in a manner that at least a part of a range to which the model material is discharged and at least a part of a range to which the support material is discharged overlap with each other is not particularly limited and may be appropriately selected depending on the intended purpose. Examples of the control in a manner that at least a part of a range to which the model material is discharged and at least a part of a range to which the support material is discharged overlap with each other include control for discharging the model material and the support material to the same place, and control for discharging liquid droplets of the model material and the support material in a manner that the liquid droplets are staggered from each other by an amount corresponding to the radius.

By preparatory discharge being performed in a manner that at least a part of a range to which the model material is discharged and at least a part of a range to which the support material is discharged overlap with each other, the three-dimensional object producing apparatus of the present disclosure can more securely ensure that the model material and the support material mix with each other, and provide a preparatory-discharge-formed object having a higher removability.

It is also preferable to let the preparatory discharge controlling unit perform control in a manner that a portion to become an internal portion of the object to be formed by preparatory discharge is formed of the support material and a portion to become a side surface of the preparatory-discharge-formed object is formed of the model material.

The portion to become an internal portion of the object to be formed by preparatory discharge refers to the inside of the preparatory-discharge-formed object formed by preparatory discharge, i.e., a portion except the external surfaces of the preparatory-discharge-formed object.

The portion to become a side surface refers to a part of the external surfaces of the preparatory-discharge-formed object except the surface contacting the stage, and refers to a surface except the bottom surface when the preparatory-discharge-formed object is, for example, a rectangular parallelepiped.

When preparatory discharge is performed in a manner that an internal portion of the preparatory-discharge-formed object is formed of a support portion and a side surface of the preparatory-discharge-formed object is formed of a model portion, the model material and the support material do not overlap with each other at any other portion than the surface contacting the stage because the model material and the support material are discharged to different positions. In this case, the three-dimensional object producing apparatus of the present disclosure can accurately control the height of the preparatory-discharge-formed object to be formed by preparatory discharge. By accurately controlling the preparatory-discharge-formed object to be uniform in height, the three-dimensional object producing apparatus of the present disclosure can suppress occurrence of, for example, contamination inside the producing apparatus and degradation of the object forming quality of a three-dimensional object due to transformation of a discharged liquid droplet to a misty state by the time when the liquid droplet lands.

Various processes performed by the three-dimensional object producing apparatus are executed by a computer including a controlling unit constituting the three-dimensional object producing apparatus.

The computer is not particularly limited and may be appropriately selected depending on the intended purpose so long as the computer is a device including devices for, for example, memory, computing, and control. Examples of the computer include a personal computer.

### <Other units and other steps>

The other units are not particularly limited and may be appropriately selected depending on the intended purpose. Examples of the other units include a flushing unit, a wiping unit, a curing unit, and a flattening unit.

The other steps are not particularly limited and may be appropriately selected depending on the intended purpose. Examples of the other steps include a flushing step, a wiping step, a curing step, and a flattening step.

The flushing step can be suitably performed by the flushing unit. The curing step can be suitably performed by the curing unit. The flattening step can be suitably performed by the flattening unit. The wiping step can be suitably performed by the wiping unit.

The flushing unit is configured to flush out the object forming material to a region other than the stage.

The flushing unit is not particularly limited and may be appropriately selected depending on the intended purpose so long as the flushing unit can cause the discharging unit to flush out a model material or a support material, or both thereof in a certain amount. Examples of the flushing unit include a mechanism (pressure purging mechanism) configured to cause the discharging unit to press and flush out the object forming material, a mechanism (suction purge mechanism) configured to bring a cap into close contact with a discharging hole of the discharging unit to suck the object forming material, and a mechanism configured to spray the object forming material in a spray state.

It is preferable that the flushing unit include a waste liquid tank in terms of facilitating recovery of the object forming material that has been flushed out.

The curing unit is not particularly limited and may be appropriately selected depending on the intended purpose so long as the curing unit can cure the object forming material. Examples of the curing unit include an ultraviolet (UV) irradiation mechanism, a firing mechanism, a sintering mechanism, and a microwave irradiation mechanism. Curing the object forming material as used herein also encompasses solidifying the object forming material.

The three-dimensional object producing apparatus of the present disclosure needs not include the curing unit when the object forming material is a material that cures over time even if any particular treatment is not applied to the material.

The curing unit is preferably an ultraviolet irradiation mechanism, and more preferably an integrated body of an ultraviolet irradiation mechanism with the discharging unit. When an ultraviolet irradiation mechanism is used as the curing unit, it is preferable that the curing unit further include an ozone removing mechanism configured to remove ozone that is emitted due to ultraviolet irradiation.

Examples of the ultraviolet irradiation mechanism include a high-pressure mercury lamp, an ultrahigh-pressure mercury lamp, metal halides, and a LED (Light Emitting Diode) lamp.

The ultrahigh-pressure mercury lamp is a point light source. However, a Deep UV type ultrahigh-pressure mercury lamp combined with an optical system for a higher light utilization efficiency is capable of irradiation in a short-wavelength range.

The metal halides having a wide wavelength range are effective for colored materials, and are formed of halides of metals such as Pb, Sn, and Fe. Metal halides can be selected depending on the absorption spectrum of a polymerization initiator.

The flattening unit is not particularly limited and may be appropriately selected depending on the intended purpose so long as the flattening unit can flatten the object forming material. Examples of the flattening unit include a roller, a brush, and a blade.

By the flattening unit flattening the object forming material, it is possible to secure average thickness accuracy and flatness of an object forming layer.

The wiping unit is not particularly limited and may be appropriately selected depending on the intended purpose so long as the wiping unit can wipe the discharging unit. Examples of the wiping unit include a wiper. The material of the wiper is not particularly limited and may be appropriately selected depending on the intended purpose. Examples of the material of the wiper include soft rubbers such as silicone rubbers and fluororubbers.

Examples of the timing at which the wiping unit wipes the discharging unit include a timing after the discharging unit flushes out the object forming material.

It is preferable to provide, in addition to the wiping unit, a recovery mechanism configured to recover an adherent matter on the discharging unit wiped by the wiping unit. The recovery mechanism is not particularly limited and may be appropriately selected depending on the intended purpose, so long as the recovery mechanism is a container that can recover and store the adherent matter.

Next, the model material and the support material will be described.

A support portion formed from the support material being cured has properties such as water disintegrability in order to have improved removability, often is in a toughness-less (brittle) state, and has a lower strength than a model portion formed from the model material being cured.

In the present disclosure, for example, the object forming material that has a higher strength when cured may be used as the model material, and the object forming material that has a lower strength when cured may be used as the support material. For example, the strength of a cured product of the object forming materials can be measured in a test according to JIS K7171 using a precision universal tester (autograph).

### «Model material»

The model material is a material that forms a portion constituting a model portion.

In the present disclosure, a model portion refers to a portion constituting the main body of a three-dimensional object.

The model material is not particularly limited and may be appropriately selected depending on the intended purpose so long as the model material is a liquid that cures when energy such as light and heat is applied. The model material preferably contains a polymerizable monomer such as a monofunctional monomer and a multifunctional monomer, an oligomer, and a photopolymerization initiator, and further contains other components as needed.

It is preferable that the model material have physical properties as a liquid, such as a viscosity and a surface tension that enable discharging of the model material by the discharging unit.

### «Support material»

The support material is a material that forms a portion constituting a support portion.

In the present disclosure, a support portion refers to a portion that holds a three-dimensional object at a predetermined position until a model portion solidifies. For example, a support portion refers to a portion that is disposed at a position to support a model portion against the gravity direction, contacts the model portion, and supports the model portion from below the model portion.

The support material (shape supporting liquid) contains a monomer (A) having a hydrogen bonding capacity, a solvent (B) having a hydrogen bonding capacity, and a polymerization initiator (C). The solvent (B) having a hydrogen bonding capacity is at least one selected from the group consisting of diols containing 3 or more but 6 or less carbon atoms, carboxylic acid compounds, amine compounds, ester compounds, ketone compounds, and urea compounds. The support material contains other components as needed.

The support material is problematic in that increasing the solubility of the support material makes removal of the support material easier but makes the supportability of the support material insufficient, and in that the shape supportability of the support material is insufficient when an object having a high volume is formed with a larger-scale object forming apparatus.

It is preferable that the support material have water disintegrability. Water disintegrability refers to failure of a cured product to maintain the initial shape and properties when immersed in water, resulting in breaking into fine pieces.

It is preferable that the three-dimensional object producing apparatus be heater-less and be capable of forming an object at normal temperature.

### EXAMPLES

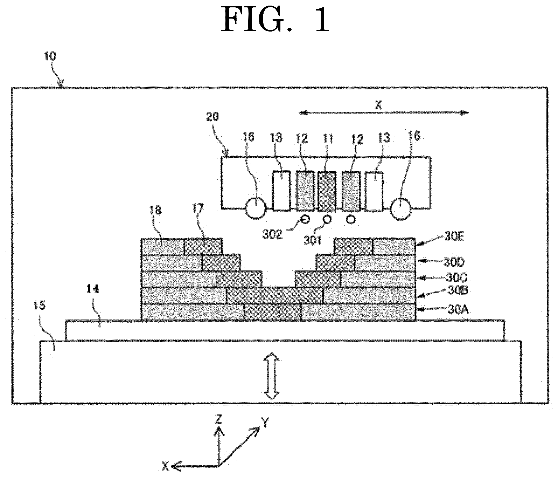

FIG. 1 is an exemplary diagram illustrating an example of a front view of a main part of the three-dimensional object producing apparatus.

A three-dimensional object forming apparatus 10 is a material jetting-type object forming apparatus, and includes a stage 14, which is an object forming stage over which object forming layers 30 are laminated to form a three-dimensional object, and an object forming unit 20 configured to form an object by sequentially laminating the object forming layers 30 over the stage 14.

The object forming unit 20 includes, in a unit holder 21, a discharging unit including a first head 11 configured to discharge the model material and second heads 12 configured to discharge the support material, UV irradiation units 13 configured to emit ultraviolet rays as active energy rays, and flattening rollers 16 configured to flatten an object forming layer 30.

Here, the two second heads 12 are disposed at both sides of the first head 11 in the X direction, the UV irradiation units 13 are disposed at the external side of the two second heads 12 respectively, and the flattening rollers 16 are disposed at the external side of the UV irradiation units 13 respectively.

The first head 11 and the second heads 12 are supplied with the model material and the support material from a cartridge 60 replaceably mounted on a cartridge mount 56 through, for example, supply tubes. When the model material used include color model materials such as black, cyan, magenta, and yellow, for example, it may be possible to provide the first head 11 with a plurality of lines of nozzles configured to discharge liquid droplets of the respective colors.

The UV irradiation units 13 are configured to cure object forming materials 30 formed of the model material discharged from the first head 11 and the support material discharged from the second heads 12.

The flattening rollers 16 are configured to flatten the surface of an object forming layer 30 cured over the stage 14, by performing relative move with respect to the stage 14 while being rotated. The phrase "over the stage 14" is used to imply a position over the stage 14 and also over an object forming layer 30 laminated over the stage 14, unless otherwise specified.

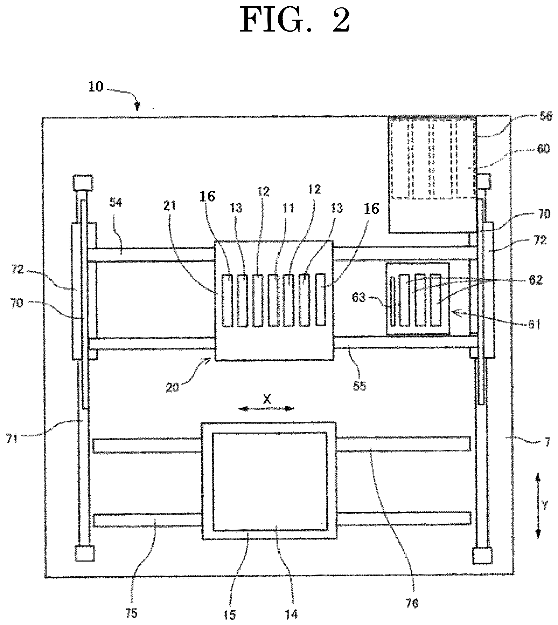

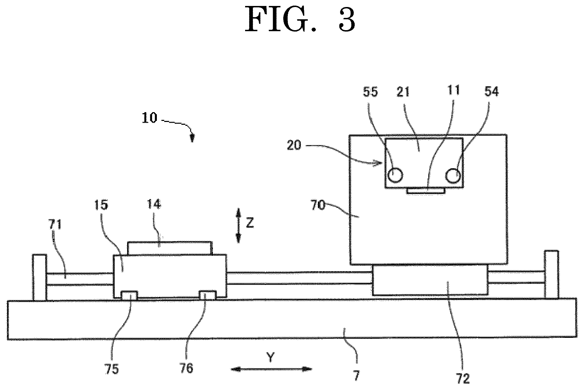

FIG. 2 is an exemplary diagram illustrating an example of a plan view of the main part of the three-dimensional object producing apparatus. FIG. 3 is an exemplary diagram illustrating an example of a side view of the main part of the three-dimensional object producing apparatus.

The unit holder 21 of the object forming unit 20 is held movably over guide members 54 and 55 disposed to extend in the X direction.

A maintenance mechanism 61 configured to perform maintenance and recovery of the first head 11 and the second heads 12 is disposed at one side of the object forming unit 20 in the X direction.

The maintenance mechanism 61 mainly includes caps 62 and a wiper 63. The caps 62 are configured to closely contact the nozzle surfaces (surfaces in which nozzles are formed) of the discharging heads 11 and 12 and suck the object forming materials from the nozzles to flush out (purge) the object forming materials that have thickened to a high viscosity and clogged the nozzles. The object forming materials that have been flushed out are conveyed to waste liquid tanks by pumps. Subsequently, the wiper 63 wipes the nozzle surfaces in order for a meniscus to be formed in the nozzles (the inside of the nozzles is in a negative pressure state) and in order for adherent matters to be removed from around the nozzles. The maintenance mechanism 61 is also configured to cover the nozzle surfaces of the heads with the caps 62 to prevent the object forming materials from drying, while discharging of the object forming materials is suspended.

The guide members 54 and 55 holding the unit holder 21 of the object forming unit 20 are held between side panels 70 and 70 on both sides. The side panels 70 and 70 include slider sections 72 movably held on guide members 71 disposed over a base member 7, to enable the object forming unit 20 to be reciprocated in the Y direction orthogonal to the X direction.

The stage 14 is moved upward and downward in the Z direction by a lifting unit 15. The lifting unit 15 is movably disposed over guide members 75 and 76 that are disposed over the base member 7 to extend in the X direction.

Next, the outline of the object forming operation of the three-dimensional object forming apparatus 10 will be described with reference to FIG. 1 in particular.

First, the object forming unit 20 is moved in the Y direction to be positioned above the stage 14.

Then, while the stage 14 is moved with respect to the object forming unit 20 that is stopped from moving, the first head 11 discharges the model material 301 to an object forming region (a region constituting a three-dimensional object), and the second heads 12 discharge the support material 302 to a support region (a region to be removed after object formation) other than the object forming region.

Then, the UV irradiation units 13 irradiate the model material 301 and the support material 302 with ultraviolet rays to cure the model material 301 and the support material 302, to form one object forming layer 30 including a model material formed object (model portion) 17 and a support material formed object (support portion) 18.

Such object forming layers 30 are formed repeatedly and laminated sequentially, to form an intended three-dimensional object formed of the model material 301 while supporting the model material 301 with the support material 302. For example, FIG. 1 illustrates a state where five object forming layers 30A to 30E are laminated.

Here, by pressing the flattening rollers 16 onto an outermost object forming layer 30 to perform flattening each time object forming layers 30 have been laminated by a plural number (the plural number needs not be a fixed value), for example, each time ten layers have been laminated, it is possible to secure thickness accuracy and flatness of the object forming layers 30.

When members having a roller shape such as the flattening rollers 16 are used as the flattening unit, rotating the flattening rollers 16 in a direction opposite to the moving direction in the X direction enables more effective functioning of the flattening (smoothing) effect.

Further, here, in order for the gap between the object forming unit 20 and the outermost object forming layer 30 to be maintained constant, the stage 14 is moved downward by the lifting unit 15 each time one object forming layer 30 is formed. Alternatively, the object forming unit 20 may be moved upward.

The three-dimensional object forming apparatus 10 may include a mechanism configured to recover and recycle the model material 301 and the support material 302. The three-dimensional object forming apparatus 10 may further include a discharge state detecting unit configured to sense a discharge failing nozzle of the first head 11 and the second heads 12. It is also preferable to control the environmental temperature in the apparatus during object formation.

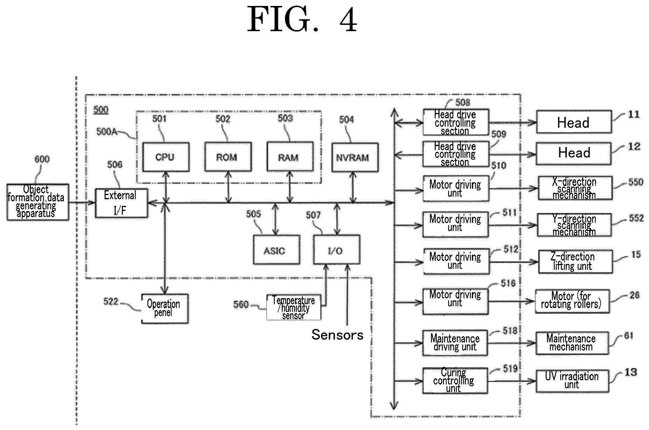

Next, the outline of a controlling section of the three-dimensional object forming apparatus will be described with reference to FIG. 4. FIG. 4 is a block diagram illustrating a controlling section of the three-dimensional object producing apparatus.

A controlling unit (controlling section) 500 includes a main controlling section 500A including a CPU (Central Processing Unit) 501, a ROM (Read Only Memory) 502, and a RAM (Random Access Memory) 503.

The CPU 501 is configured to control the entire three-dimensional object forming apparatus 10. The ROM 502 is configured to store three-dimensional object forming programs including a program causing the CPU 501 to perform control on a three-dimensional object forming operation including control relating to the present disclosure, and other fixed data. The RAM 503 is configured to temporarily store object formation data.

The controlling section 500 includes a nonvolatile memory (NVRAM; Non-Volatile RAM) 504 configured to retain data even while the power supply to the apparatus is cut off. The controlling section 500 also includes an ASIC (Application Specific Integrated Circuit) 505 configured to perform image processing for performing various signal processing on image data, and process input/output signals for controlling the entire apparatus.

An object formation data generating apparatus 600 is an apparatus configured to generate two-dimensional data (object formation data) representing cross-sections of a final object (three-dimensional object) sliced per object forming layer. The object formation data generating apparatus 600 is constructed with an information processing apparatus such as a personal computer.

The controlling section 500 includes an I/O (Input/Output) 507 configured to receive sensing signals from various sensors.

The controlling section 500 includes a head drive controlling section 508 configured to control driving of the first head 11, and a head drive controlling section 509 configured to control driving of the second heads 12.

The controlling section 500 includes a motor driving unit 510 configured to drive a motor constituting an X-direction scanning mechanism 550 configured to move the object forming unit 20 in the X direction, and a motor driving unit 511 configured to drive a motor constituting a Y-direction scanning mechanism 552 configured to move the object forming unit 20 in the Y direction.

The controlling section 500 includes a motor driving unit configured to drive a motor of an X-direction stage scanning mechanism configured to move the stage 14 illustrated in FIG. 3 in the X direction together with the lifting unit 15, and a motor driving unit configured to drive a motor of the lifting unit 15 configured to move the stage 14 upward and downward in the Z direction. In moving upward and downward in the Z direction, the object forming unit 20 may be moved upward and downward, as described above.

The controlling section 500 includes a motor driving unit 516 configured to drive a motor 26 configured to drive rotation of the flattening rollers 16 illustrated in FIG. 1 and FIG. 3, and a maintenance driving unit 518 configured to drive the maintenance mechanism 61 for the first head 11 and the second heads 12.

The controlling section 500 includes a curing controlling unit 519 configured to control ultraviolet irradiation by the UV irradiation units 13.

Sensing signals of, for example, a temperature/humidity sensor 560 configured to detect the temperature and humidity as the environmental conditions of the apparatus and sensing signals of other sensors are input to the I/O 507 of the controlling section 500.

An operation panel 522 for inputting and displaying needed information of the apparatus is coupled to the controlling section 500.

The controlling section 500 is configured to receive object formation data from the object formation data generating apparatus 600. The controlling section 500 is driven in a manner that a three-dimensional object is formed according to the input object formation data. As a result, a desired three-dimensional object is formed by the three-dimensional object forming apparatus 10.

### <Embodiment of control performed by preparatory discharge controlling unit>

Control by the controlling section 500 of the three-dimensional object forming apparatus 10 serving as the preparatory discharge controlling unit on the discharging unit in a manner to bring at least the model material into contact with the stage in preparatory discharge to outside the object forming region in which a three-dimensional object is to be formed over the stage will be described in detail.

First, the flow of the move of the discharging unit and the stage in performing flushing (purging) before production of a three-dimensional object is started will be described.

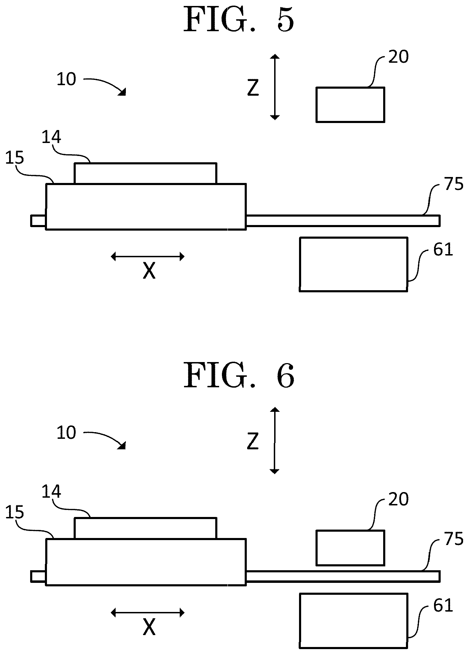

FIG. 5 is a diagram illustrating an example of a positional relationship between the discharging unit and the stage during a standby period before production of a three-dimensional object is started.

The object forming stage 14 is movably disposed over the guide member 75 (76) via the lifting unit 15.

FIG. 6 is a diagram illustrating an example of a positional relationship between the discharging unit and the stage when the discharging unit performs flushing.

The object forming unit 20 performs flushing (purging) toward the maintenance mechanism 61 to remove the object forming materials that have thickened to a high viscosity and coating films of the object forming materials formed near the openings of the first head 11 and the second heads 12. The three-dimensional object forming apparatus 10 may perform purging for removing the object forming materials have thickened to a high viscosity and coating films of the object forming materials formed near the openings of the first head 11 and the second heads 12 not only at the start of production of a three-dimensional object but also in the middle of forming a three-dimensional object. Here, purging may be performed each time a predetermined number of object forming layers (for example, five-hundred layers) have been formed.

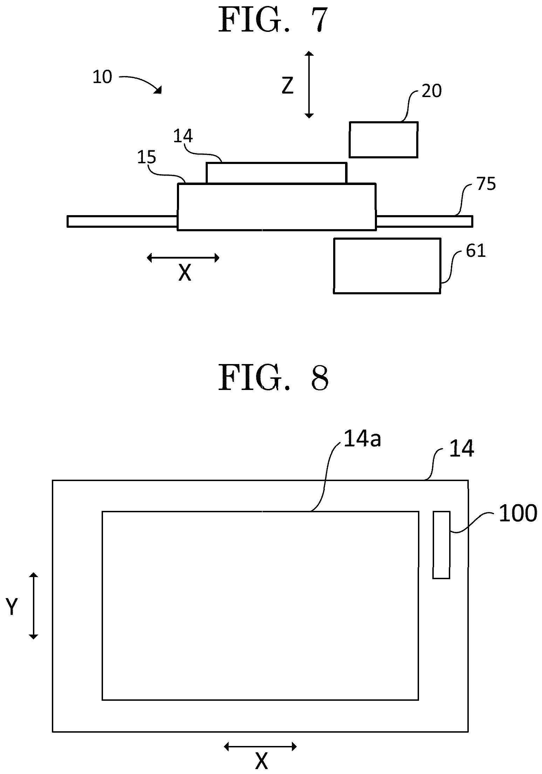

FIG. 7 is a diagram illustrating an example of a positional relationship between the discharging unit and the stage when the discharging unit discharges the object forming materials to the object forming region to start production of a three-dimensional object.

The object forming unit 20 moves in the Z direction after performing purging, to move to a position suitable for discharging the object forming materials to the object forming region. The object forming stage moves in the X direction to positionally align with the object forming unit 20. Here, because the object forming unit 20 has moved in the Z direction, the meniscus in the discharging holes of the first head 11 and the second heads 12 may have become unstable (broken).

The three-dimensional object forming apparatus 10 stabilizes the meniscus in the discharging holes of the first head 11 and the second heads 12 by performing preparatory discharge, to suppress discharging failure.

Preparatory discharge is performed by the first head 11 and the second heads 12 discharging the model material and the support material to outside the object forming region over the stage 14.

FIG. 8 is a diagram illustrating an embodiment of a place where a preparatory-discharge-formed object is to be formed.

In FIG. 8, a preparatory-discharge-formed object 100 is formed in a region outside an object forming region 14a provided over the stage 14.

In the embodiment illustrated in FIG. 8, in forming a predetermined object forming layer, the first head 11 and the second heads 12 first perform preparatory discharge at a place where the preparatory-discharge-formed object 100 is positioned, before starting discharging to the object forming region 14a. Here, the length of the preparatory-discharge-formed object 100 in a top-down direction of the drawing sheet (Y direction) is a length that enables the first head 11 and the second heads 12 to discharge the model material and the support material without being scanned in the Y direction. Next, the first head 11 and the second heads 12 discharge a model material or a support material, or both thereof to the object forming region 14a based on the object formation data while being scanned to the left (hereinafter this operation may be referred to as "scan"). Successively, when having completed discharging in an amount corresponding to the object formation data up to the left end of the object forming region 14a, the first head 11 and the second heads 12 return to the place where the preparatory-discharge-formed object 100 is positioned, and are then scanned downward in the Y direction by a distance corresponding to the Y-direction length of the first head 11 and the second heads 12. Through repetition of scanning in the X direction and scanning in the Y direction in this way, a predetermined object forming layer is formed.

In the embodiment illustrated in FIG. 8, in forming a predetermined object forming layer, preparatory discharge is performed before the first scan. Therefore, it is possible to suppress the amounts of the object forming materials that are discharged in preparatory discharge and are not to constitute a three-dimensional object. Further, in the present embodiment, preparatory discharge may be performed in the scan immediately after purging is performed.

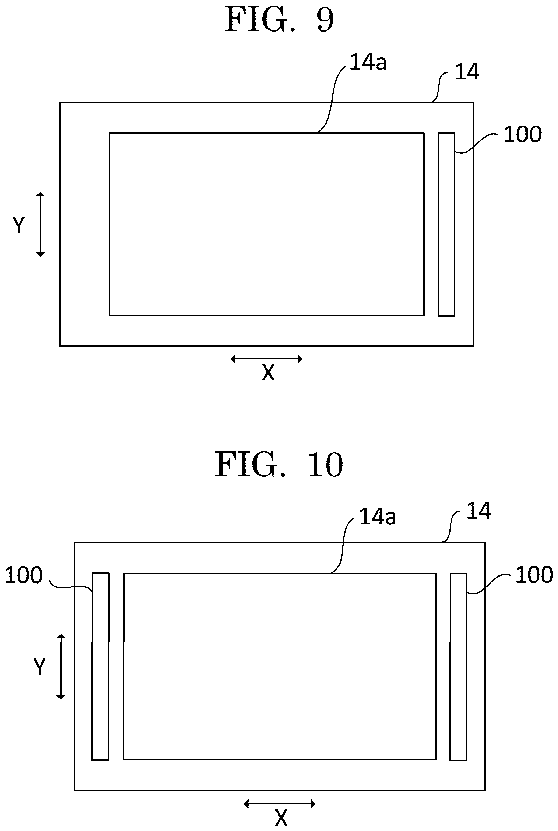

FIG. 9 is a diagram illustrating another embodiment of a place where a preparatory-discharge-formed object is to be formed.

In the embodiment illustrated in FIG. 9, in forming a predetermined object forming layer, the first head 11 and the second heads 12 perform preparatory discharge each time the first head 11 and the second heads 12 perform scan. Therefore, in the present embodiment, the length of the preparatory-discharge-formed object 100 in the Y direction is about the same as the length of the object forming region 14a in the Y direction.

In the embodiment illustrated in FIG. 9, it is possible to more securely suppress discharging failure because the first head 11 and the second heads 12 perform preparatory discharge each time scan is performed. Therefore, the object forming accuracy of a three-dimensional object can be better improved.

FIG. 10 is a diagram illustrating another embodiment of a place where a preparatory-discharge-formed object is to be formed.

In the embodiment illustrated in FIG. 10, in forming a predetermined object forming layer, the first head 11 and the second heads 12 perform bidirectional discharge of discharging the object forming materials to the object forming region 14a in both of leftward scanning and rightward scanning in the X direction. Here, as illustrated in FIG. 10, the first head 11 and the second heads 12 perform preparatory discharge in both of the regions at the left-hand and right-hand sides of the object forming region 14a.

In the embodiment illustrated in FIG. 10, it is possible to more securely suppress discharging failure because the first head 11 and the second head 12 perform preparatory discharge each time scan is performed in the bidirectional discharge. Therefore, the object forming accuracy of a three-dimensional object can be better improved.

Next, an embodiment of the control on the discharging unit in a manner to bring at least the model material into contact with the stage will be described.

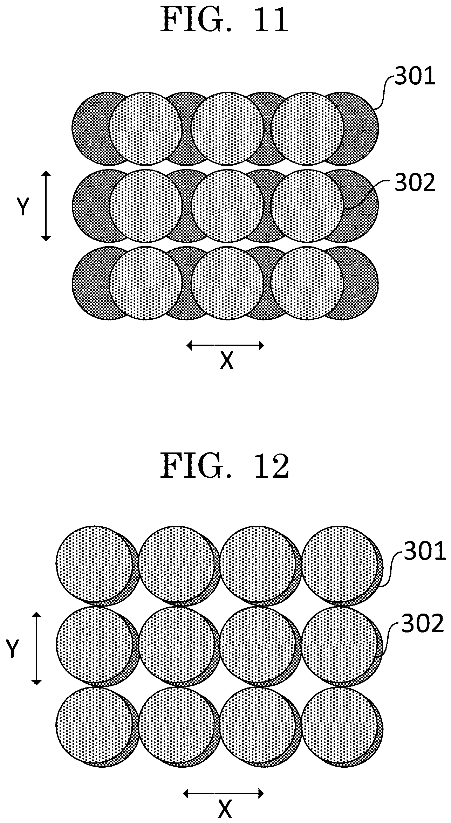

FIG. 11 illustrates an embodiment of a case where the model material and the support material are discharged in a manner that the model material and the support material are mixed with each other.

In the embodiment illustrated in FIG. 11, in forming a predetermined object forming layer constituting the preparatory-discharge-formed object 100 by preparatory discharge of the model material 301 and the support material 302, the first head 11 and the second heads 12 discharge liquid droplets of the model material 301 and the support material 302 in a manner that the liquid droplets are staggered from each other by an amount corresponding to the radius. In this way, the liquid droplets of the model material 301 and the support material 302 are located overlapping with each other in a staggered state. Therefore, the materials are to be cured after the materials have been mixed with each other. An object (mixture portion) formed from the mixture material of the model material 301 and the support material 302 being cured has a property similar to the model material. Therefore, the preparatory-discharge-formed object 100 formed of the mixture portion can be easily removed from the stage without disintegrating into a particulate state.

In the present embodiment, there is no need that the entire preparatory-discharge-formed object 100 be formed of the mixture portion. At least a surface of the preparatory-discharge-formed object 100 contacting the stage needs to be formed of the mixture portion.

FIG. 12 illustrates another embodiment of a case where the model material and the support material are discharged in a manner that the model material and the support material are mixed with each other.

In the embodiment illustrated in FIG. 12, in forming a predetermined object forming layer constituting the preparatory-discharge-formed object 100 by preparatory discharge of the model material 301 and the support material 302, the first head 11 and the second heads 12 discharge liquid droplets of the model material 301 and the support material 302 in a manner that the liquid droplets almost completely coincide with each other. In this way, the model material 301 and the support material 302 are to be cured after the materials have been mixed with each other. Therefore, the preparatory-discharge-formed object 100 formed of the mixture material of the model material 301 and the support material 302 can be easily removed from the stage without disintegrating into a particulate state.

Also in the present embodiment, there is no need that the entire preparatory-discharge-formed object 100 be formed of the mixture portion, but at least a surface of the preparatory-discharge-formed object 100 contacting the stage needs to be formed of the mixture portion, as in the embodiment illustrated in FIG. 11.

Next, the structure of the preparatory-discharge-formed object formed by preparatory discharge will be described.

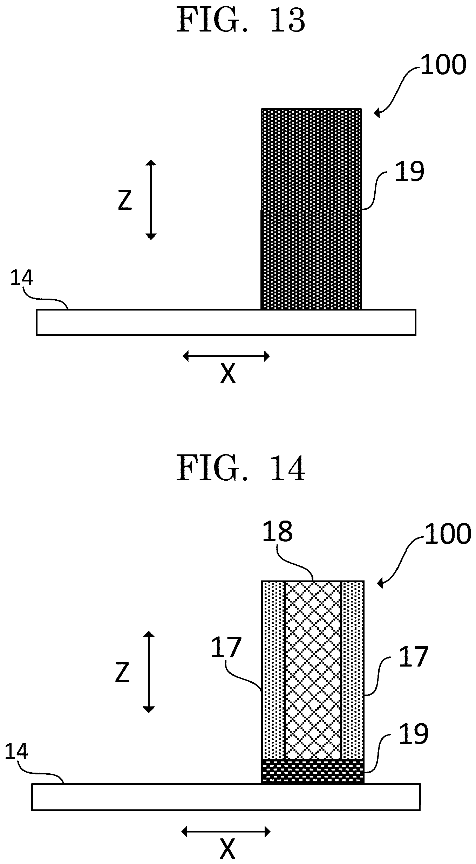

FIG. 13 is a diagram illustrating an embodiment of the structure of the preparatory-discharge-formed object formed over the stage.

In the embodiment illustrated in FIG. 13, the preparatory-discharge-formed object 100 is formed of a mixture portion 19 formed from a mixture material of the model material 301 and the support material 302 being cured in a mixed state. In this case, because a surface of the preparatory-discharge-formed object 100 contacting the object forming stage 14 is formed of the mixture portion 19, the preparatory-discharge-formed object 100 can be easily removed without contaminating the object forming stage 14.

FIG. 14 is a diagram illustrating another embodiment of the structure of the preparatory-discharge-formed object formed over the stage.

In the embodiment illustrated in FIG. 14, a surface of the preparatory-discharge-formed object 100 contacting the object forming stage 14 is formed of a mixture portion 19, side surfaces of the preparatory-discharge-formed object 100 are formed of a model portion 17, and the remaining portions of the preparatory-discharge-formed object 100 are formed of a support portion 18. In this case, because the surface of the preparatory-discharge-formed object 100 contacting the object forming stage 14 is formed of the mixture portion 19, the preparatory-discharge-formed object 100 can be easily removed from the object forming stage 14 without disintegrating into a particulate state. Furthermore, because any other portions of the preparatory-discharge-formed object 100 than the surface contacting the object forming stage 14 are formed of the model material 301 and the support material 302 that have been cured in a state that the materials do no overlap each other, the three-dimensional object forming apparatus 10 can accurately control the height of the preparatory-discharge-formed object 100 (the length in the Z direction). By accurately controlling the preparatory-discharge-formed object 100 to be uniform in height, the three-dimensional object forming apparatus 10 can suppress occurrence of, for example, contamination inside the three-dimensional object forming apparatus 10 and degradation of the object forming quality due to transformation of the model material 301 and the support material 302 to a misty state by the time when the materials land.

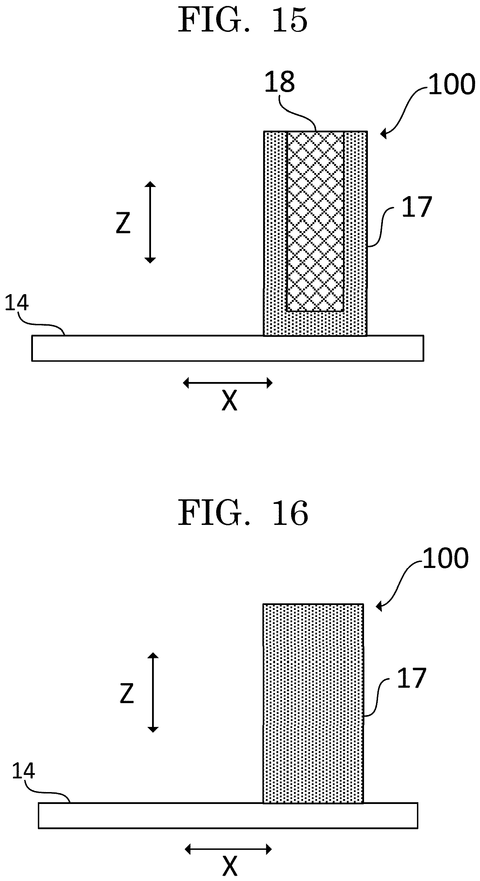

FIG. 15 is a diagram illustrating another embodiment of the structure of the preparatory-discharge-formed object formed over the stage.

In the embodiment illustrated in FIG. 15, a surface of the preparatory-discharge-formed object 100 contacting the object forming stage 14 and side surfaces of the preparatory-discharge-formed object 100 are formed of a model portion 17, and the remaining portions of the preparatory-discharge-formed object 100 are formed of a support portion 18. In this case, because the surface of the preparatory-discharge-formed object 100 contacting the object forming stage 14 is formed of the model portion 17, the preparatory-discharge-formed object 100 can be easily removed from the object forming stage 14 without disintegrating into a particulate state. Furthermore, because the whole body of the preparatory-discharge-formed object 100 is formed of the model material 301 and the support material 302 that have been cured in a state that the materials do no overlap with each other, the three-dimensional object forming apparatus 10 can control the height of the preparatory-discharge-formed object 100 (the length in the Z direction) more accurately than in the embodiment illustrated in FIG. 14. By accurately controlling the preparatory-discharge-formed object 100 to be uniform in height, the three-dimensional object forming apparatus 10 can suppress occurrence of, for example, contamination inside the three-dimensional object forming apparatus 10 and degradation of the object forming quality due to transformation of the model material 301 and the support material 302 to a misty state by the time when the materials land.

Moreover, the preparatory-discharge-formed object 100 may be formed of a model portion 17 as illustrated in FIG. 16.

Next, the three-dimensional object forming program of the present disclosure including control for causing the first discharging head 11 and the second discharging heads 12 to perform preparatory discharge and causing a computer to execute the same functions as the three-dimensional object producing method of the present disclosure will be described. The process according to the three-dimensional object forming program of the present disclosure can be executed with the use of a computer including a controlling section 500 constructing the three-dimensional object forming apparatus 10.

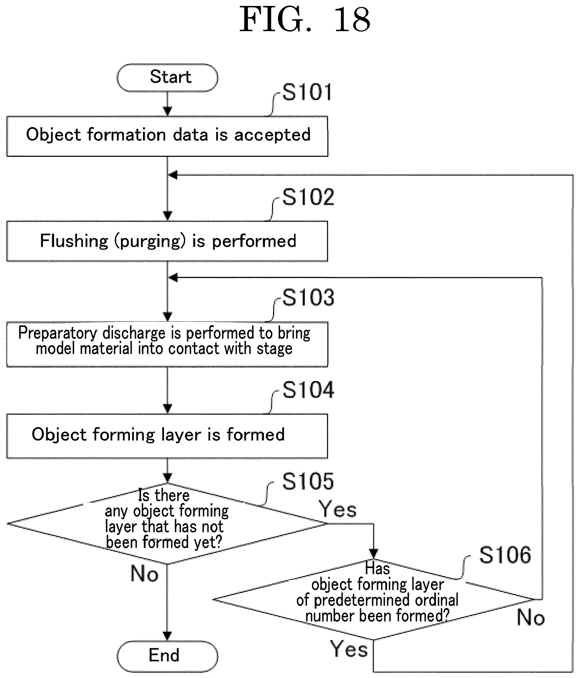

FIG. 18 is a flowchart illustrating an example of the process according to the three-dimensional object forming program.

In the step S101, the controlling section 500 accepts object formation data for a three-dimensional object to be formed by the three-dimensional object forming apparatus 10 received by the I/F 506, and moves the flow to the step S102.

In the step S102, the controlling section 500 moves the object forming unit 20 to the position of the maintenance mechanism 61 to cause the object forming unit 20 to perform flushing (purging), and moves the flow to the step S103.

In the step S103, the controlling section 500 causes the first head 11 and the second heads 12 of the object forming unit 20 to perform preparatory discharge to outside the object forming region 14a over the object forming stage 14 in a manner to bring the model material 301 into contact with the object forming stage 14, and moves the flow to the step S104. The step S103 may be skipped where appropriate.

In the step S104, the controlling section 500 causes the three-dimensional object forming apparatus 10 to form an n-th object forming layer (n being an integer of 1 or greater) based on the object formation data accepted in the step S101, and moves the flow to the step S105.

In the step S105, the controlling section 500 determines whether there is any object forming layer that has not been formed yet. For example, when there is an object forming layer that has not been formed yet, the controlling section 500 moves the flow to the step S106 and repeats the flow. On the other hand, when there is no object forming layer that has not been formed yet, the controlling section 500 terminates the flow.

In the step S106, the controlling section 500 determines whether an object forming layer of a predetermined ordinal number has been formed. When an object forming layer of a predetermined ordinal number (for example, a layer of an ordinal number that is a multiple of 500) has been formed, the controlling section 500 returns the flow to the step S102. When an object forming layer of a predetermined ordinal number (for example, a layer of an ordinal number that is a multiple of 500) has not been formed, the controlling section 500 returns the flow to the step S103.

The present disclosure will be more specifically described below by way of Examples. The present disclosure should not be construed as being limited to these Examples.

### <Preparation of model material>

Isobornyl acrylate (available from Kyoei Chemical Co., Ltd.) (60 parts by mass), acryloylmorpholine (ACMO, available from KJ Chemicals Corporation) (10 parts by mass), and urethane acrylate (product name: UV-1700B, available from Nippon Synthetic Chemical Industry Co., Ltd., with a molecular weight of 2,000) (30 parts by mass) were mixed uniformly in a beaker. Subsequently, a reaction initiator (product name: IRGACURE 819, available from BASF) (2 parts by mass) was added to the resultant, and further mixed uniformly. The resultant was passed through a filter (product name: CCP-FX-C1B, available from ADVANTEC Co., Ltd. with an average pore diameter of 3 micrometers), to obtain a model material.

### <Preparation of support material>

Acryloylmorpholine (ACMO, available from KJ Chemicals Corporation) (40 parts by mass), polyoxypropylene glycol (60 parts by mass), a reaction initiator (product name: IRGACURE 819, available from BASF) (3 parts by mass), and a polymerization inhibitor (product name: PHENOTHIAZINE, available from Tokyo Chemical Industry Co., Ltd.) (0.1 parts by mass) were mixed uniformly and passed through a filter (product name: CCP-FX-C1B, available from ADVANTEC Co., Ltd., with an average pore diameter of 3 micrometers), to obtain a support material.

In the three-dimensional object producing apparatus illustrated in FIG. 1, the obtained model material and support material were filled in three tanks leading to inkjet heads (product name: MH2420, available from Ricoh Industry Company, Ltd.).

### <Validation test>

Using the three-dimensional object producing apparatus, test objects for evaluation of object removability were formed, and removability of the test objects formed was evaluated.

### «Test example 1»

First, a test object formed of a model portion, which would be formed from the model material being cured, was formed.

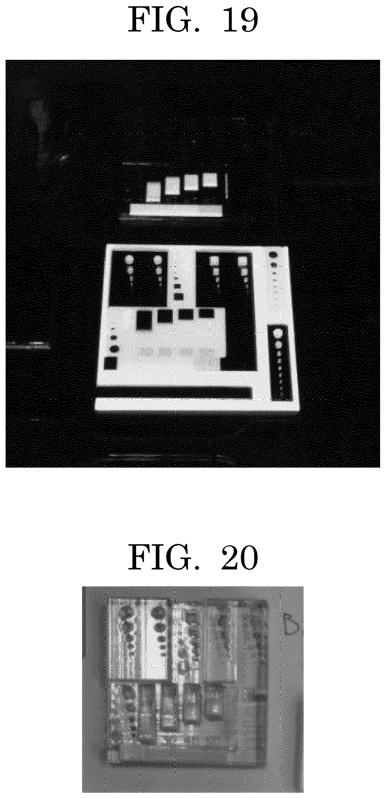

FIG. 19 is an image of the test object present in the three-dimensional object producing apparatus, captured immediately after the test object was formed.

Next, the test object illustrated in FIG. 19 was removed from the stage of the forming apparatus.

FIG. 20 is an image of the test object formed of the model portion formed in Test example 1, captured after the test object was removed from the object forming stage.

From FIG. 20, it can be seen that the test object formed of the model portion was free of a portion that was out of shape due to, for example, cracking, even after the test object was removed from the object forming stage.

It was possible to remove the test object formed of the model portion easily from the object forming stage without letting the test object disintegrate.

### «Test example 2»

Next, a test object formed of a mixture portion, which would be formed from a mixture material, in which the model material and the support material were mixed, being cured, was formed and removed from the stage as in Text example 1. In Test example 2, the mixture material was obtained by discharging the model material and the support material in a manner that the materials would overlap with each other.

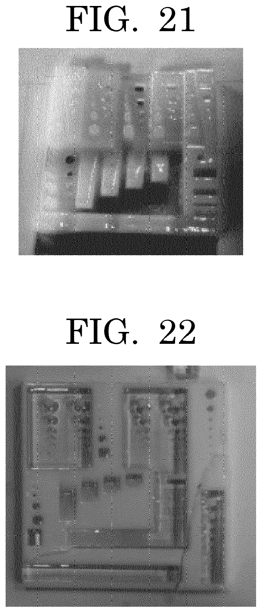

FIG. 21 is an image of the test object formed of the mixture portion formed in Test example 2, captured after the test object was removed from the object forming stage.

From FIG. 21, it can be seen that the test object formed of the mixture portion was free of a portion that was out of shape due to, for example, cracking, even after the test object was removed from the object forming stage.

It was possible to remove the test object formed of the mixture portion easily from the object forming stage without letting the test object disintegrate.

### «Test example 3»

Next, a test object formed of a support portion, which would be formed from the support material being cured, was formed and removed from the stage as in Text example 1 and Text example 2.

FIG. 22 is an image of the test object formed of the support portion formed in Text example 3, captured after the test object was removed from the object forming stage.

From FIG. 22, it can be seen that the test object formed of the support portion incurred a crevice (crack) at the lower right portion in FIG. 22.

The support portion that had constituted the crack portion of the test object formed of the support portion disintegrated into a particulate state over the object forming stage when the test object was removed from the object forming stage, and contaminated the object forming stage. It was impossible to remove the test object easily.

From the results of Test examples 1 to 3, it was possible to confirm that preparatory discharge performed in a manner to bring at least the model material into contact with the stage enabled easy removal of the materials discharged for the preparatory purpose without letting the materials contaminate the stage.

Aspects of the present disclosure are, for example, as follows.
<1> A three-dimensional object producing apparatus including:
   a discharging unit configured to discharge a model material or a support material, or both thereof, and
   a preparatory discharge controlling unit configured to control the discharging unit in a manner to bring at least the model material into contact with a stage in preparatory discharge to outside a region in which a three-dimensional object is to be formed.
<2> The three-dimensional object producing apparatus according to <1>,
   wherein the preparatory discharge controlling unit performs the controlling before the discharging unit performs discharging to the region.
<3> The three-dimensional object producing apparatus according to <1> or <2>,
   wherein the preparatory discharge controlling unit performs the controlling after the discharging unit performs flushing and before the discharging unit performs discharging to the region.
<4> The three-dimensional object producing apparatus according to any one of <1> to <3>,
   wherein the preparatory discharge controlling unit performs the controlling after the discharging unit moves in a vertical direction and before the discharging unit performs discharging to the region.
<5> The three-dimensional object producing apparatus according to any one of <1> to <4>,
   wherein the preparatory discharge controlling unit performs the controlling in a manner to bring the model material and the support material into contact with the stage in a mixed state.
<6> The three-dimensional object producing apparatus according to <5>,
   wherein the preparatory discharge controlling unit performs the controlling in a manner that at least a part of a range to which the model material is discharged and at least a part of a range to which the support material is discharged overlap with each other.
<7> The three-dimensional object producing apparatus according to any one of <1> to <6>,
   wherein the preparatory discharge controlling unit performs the controlling in a manner that an internal portion of an object to be formed by the preparatory discharge is formed of the support material and a side surface of the object is formed of the model material.
<8> A three-dimensional object producing method including:
   causing a discharging unit to discharge a model material or a support material, or both thereof, and
   controlling the discharging unit in a manner to bring at least the model material into contact with a stage in preparatory discharge to outside a region in which a three-dimensional object is to be formed.
<9> The three-dimensional object producing method according to <8>,
   wherein the controlling is performed before the discharging unit performs discharging to the region.
<10> The three-dimensional object producing method according to <8> or <9>,
   wherein the controlling is performed after the discharging unit performs flushing and before the discharging unit performs discharging to the region.
<11> The three-dimensional object producing method according to any one of <8> to <10>,
   wherein the controlling is performed after the discharging unit moves in a vertical direction and before the discharging unit performs discharging to the region.
<12> The three-dimensional object producing method according to any one of <8> to <11>,
   wherein the controlling is performed in a manner to bring the model material and the support material into contact with the stage in a mixed state.
<13> The three-dimensional object producing method according to <12>,
   wherein the controlling is performed in a manner that at least a part of a range to which the model material is discharged and at least a part of a range to which the support material is discharged overlap with each other.
<14> The three-dimensional object producing method according to any one of <8> to <13>,
   wherein the controlling is performed in a manner that an internal portion of an object to be formed by the preparatory discharge is formed of the support material and a side surface of the object is formed of the model material.
<15> A three-dimensional object forming program causing a computer to execute a process including:
   causing a discharging unit to discharge a model material or a support material, or both thereof; and
   controlling the discharging unit in a manner to bring at least the model material into contact with a stage in preparatory discharge to outside a region in which a three-dimensional object is to be formed.
<16> The three-dimensional object forming program according to <15>, wherein the process includes causing the controlling the discharging unit to be performed before the discharging unit performs discharging to the region.
<17> The three-dimensional object forming program according to <15> or <16>, wherein the process includes causing the controlling the discharging unit to be performed after the discharging unit performs flushing and before the discharging unit performs discharging to the region.
<18> The three-dimensional object forming program according to any one of <15> to <17>,
   wherein the process includes causing the controlling the discharging unit to be performed after the discharging unit moves in a vertical direction and before the discharging unit performs discharging to the region.
<19> The three-dimensional object forming program according to any one of <15> to <18>,
   wherein the process includes causing the controlling the discharging unit to be performed in a manner to bring the model material and the support material into contact with the stage in a mixed state.
<20> The three-dimensional object forming program according to any one of <15> to <19>,
   wherein the process includes causing the controlling the discharging unit to be performed in a manner that an internal portion of an object to be formed by the preparatory discharge is formed of the support material and a side surface of the object is formed of the model ma terial.

The three-dimensional object producing apparatus according to any one of <1> to <7>, the three-dimensional object producing method according to any one of <8> to <14>, and the three-dimensional object forming program according to any one of <15> to <20> can solve the various problems in the related art and can achieve the object of the present disclosure.

## Claims

1. A three-dimensional object producing apparatus comprising:
a discharging unit configured to discharge a model material or a support material, or both thereof; and
a preparatory discharge controlling unit configured to control the discharging unit in a manner to bring at least the model material into contact with a stage in preparatory discharge to outside a region in which a three-dimensional object is to be formed.

2. The three-dimensional object producing apparatus according to claim 1,
wherein the preparatory discharge controlling unit performs the controlling before the discharging unit performs discharging to the region.

3. The three-dimensional object producing apparatus according to claim 1 or 2, wherein the preparatory discharge controlling unit performs the controlling after the discharging unit performs flushing and before the discharging unit performs discharging to the region.

4. The three-dimensional object producing apparatus according to any one of claims 1 to 3,
wherein the preparatory discharge controlling unit performs the controlling after the discharging unit moves in a vertical direction and before the discharging unit performs discharging to the region.

5. The three-dimensional object producing apparatus according to any one of claims 1 to 4,
wherein the preparatory discharge controlling unit performs the controlling in a manner to bring the model material and the support material into contact with the stage in a mixed state.

6. The three-dimensional object producing apparatus according to claim 5,
wherein the preparatory discharge controlling unit performs the controlling in a manner that at least a part of a range to which the model material is discharged and at least a part of a range to which the support material is discharged overlap with each other.

7. The three-dimensional object producing apparatus according to any one of claims 1 to 6,
wherein the preparatory discharge controlling unit performs the controlling in a manner that an internal portion of an object to be formed by the preparatory discharge is formed of the support material and a side surface of the object is formed of the model material.

8. A three-dimensional object producing method comprising:
causing a discharging unit to discharge a model material or a support material, or both thereof and
controlling the discharging unit in a manner to bring at least the model material into contact with a stage in preparatory discharge to outside a region in which a three-dimensional object is to be formed.

9. A computer readable storage medium comprising computer executable instructions that when executed by a computer will cause the computer to carry out the method of claim 8.

10. A three-dimensional object forming program causing a computer to execute a process comprising:
causing a discharging unit to discharge a model material or a support material, or both thereof, and
controlling the discharging unit in a manner to bring at least the model material into contact with a stage in preparatory discharge to outside a region in which a three-dimensional object is to be formed.
